# FASCICULE DE BREVET EUROPEEN

(11) **EP 3 237 473 B1**
(45) Date de publication et mention de la délivrance du brevet: **24.07.2019**
(21) Numéro de dépôt: 15823637.2
(22) Date de dépôt: 14.12.2015
(51) Int. Cl.: B29C 64/40, B33Y 70/00, C08F 293/00

(54) **POCEDE D'IMPRESSION 3D UTILISANT UN COPOLYMERE A BLOCS HYDROSOLUBLES COMME MATERIAU SUPPORT**
3D-DRUCKVERFAHREN VERWENDEND EIN WASSERLÖSLICHES BLOCKCOPOLYMER ALS TRÄGERMATERIAL
3D-PRINTING PROCESS USING A WATER SOLUBLE BLOCK COPOLYMER AS SUPPORT MATERIAL

(30) Priorité: 23.12.2014 FR 1463192
(43) Date de publication de la demande: 01.11.2017
(73) Titulaire: Arkema France, 92700 Colombes (FR)
(72) Inventeur: INOUBLI, Raber, 69100 Villeurbanne (FR); BOURRIGAUD, Sylvain, 64340 Morlanne (FR)
(86) Numéro de dépôt international: PCT/FR2015/053464
(87) Numéro de publication internationale: WO 2016/102802

(56) Documents cités:
- EP-A1- 0 947 527
- EP-A1- 1 465 665
- WO-A1-2010/000725
- WO-A1-2012/143182
- US-B2- 7 951 888

## Description

### DOMAINE DE L'INVENTION

La présente invention se rapporte de manière générale au domaine de l'impression tridimensionnelle (ou impression 3D) d'un objet. Cette technologie permet de fabriquer de manière additive (en anglais : « additive manufacturing » ou AM) un objet réel à partir d'un objet virtuel. Elle est basée sur la découpe de l'objet virtuel 3D en lamelles 2D de très fine épaisseur. Ces fines lamelles sont déposées une à une en les fixant sur les précédentes, ce qui reconstitue l'objet réel. Parmi les matériaux constitutifs de l'objet, on trouve les matériaux plastiques (notamment l'acrylonitrile butadiène styrène (ou ABS) et acide polylactique (ou PLA)), la cire, le métal, le plâtre de Paris ou les céramiques. Des exemples de techniques additives sont le dépôt de filaments en fusion (« fused déposition modeling » ou FDM) et le frittage par laser (en anglais « laser sintering »).

Le modelage par dépôt de filaments en fusion est une technique mécanique qui consiste à faire fondre un filament de matière synthétique (généralement du plastique type ABS ou PLA) à travers une buse d'extrusion chauffée à une température variant entre 160 et 270 °C. Un filament en fusion, d'un diamètre de l'ordre du dixième de millimètre, en sort. Ce fil est déposé en ligne et vient se coller par re-fusion sur ce qui a été déposé au préalable. Cette technique permet de créer des pièces en bonne matière, disposant de caractéristiques mécaniques, thermiques et d'une stabilité identiques aux pièces thermoplastiques injectées. Cette technique a également un avantage important concernant la structure de support nécessaire à la production des pièces, puisque ce support de construction est dans la plupart des cas constitué dans une autre matière que celle constitutive de l'objet créé, matière qui est éliminée dudit objet, lorsque le processus de construction de ce dernier est fini.

Selon une variante de réalisation, le matériau utilisé comme support pour la production d'objets 3D est un polymère, appelé aussi polymère sacrificiel. La présente invention se rapporte ainsi, de manière plus spécifique, à un nouveau type de polymère sacrificiel ou matériau support pour impression 3D, comprenant un nouveau copolymère à blocs.

### ARRIERE-PLAN TECHNIQUE

Certaines techniques d'impression 3D de polymères, tels que les systèmes de fabrication numériques (en anglais : « digitals manufaturing systems ») nécessitent l'utilisation d'un polymère sacrificiel pour « supporter » le polymère de l'objet à imprimer. Cette technique et les caractéristiques de ce polymère sacrificiel sont décrites dans le document WO2010/045147. Selon ce document, les principales caractéristiques de ce polymère sacrificiel doivent être :
- solubilité en milieu aqueux (le plus souvent alcalin) ;
- une température de transition de relaxation en fluage (directement liée à la température de transition vitreuse Tg, selon le protocole de mesure décrit dans le brevet US 5866058) de l'ordre de celle du polymère à imprimer (ou d'une des fractions du polymère à imprimer). Par exemple, pour une impression d'ABS, la Tg du polymère sacrificiel doit être d'au moins 120°C ;
- une capacité à être compoundé avec des additifs permettant l'amélioration des propriétés mécaniques.

Le matériau support décrit dans le document WO2010/045147 contient un copolymère et un modifiant choc polymère. Selon un mode de réalisation, ledit copolymère comporte des unités monomères portant un groupe carboxyle et des unités monomères comprenant un groupe phényle. Selon un autre mode de réalisation, le matériau support est formé d'un premier copolymère et d'un second copolymère. Ledit premier copolymère comporte des unités monomères portant un groupe carboxyle, des unités monomères comprenant un groupe phényle et des unités monomères comprenant des groupes ester carboxylate. Ledit second copolymère comprend une pluralité de groupes ester carboxylate à terminaisons époxy. Les exemples 1-15 décrivent l'utilisation comme matériau support d'un mélange de copolymère et de modifiant choc, ledit copolymère étant à base d'acrylate de butyle, de styrène et d'acide méthacrylique. L'anhydrification partielle des fonctions acides lui permet d'atteindre des Tg de l'ordre de 120°C (mesurées par DSC) et donc de pouvoir imprimer des polymères tels que l'ABS. Le système utilisé dans ce brevet est issu du compoundage du copolymère avec un additif choc de type Elvaloy® (Du Pont) et/ou Lotader® (Arkema). Lors de l'étape préalable de compoundage, le modifiant choc réagit, via les fonctions époxy, avec les fonctions acides dudit copolymère.

La demanderesse a maintenant trouvé qu'il est possible de préparer un copolymère à blocs faisant seul office de matériau support, ledit copolymère à blocs possédant les propriétés requises pour remplir cette fonction (à savoir une solubilité en milieu aqueux et une température de transition vitreuse Tg de la phase majoritaire élevée, de préférence supérieure à 120°C) sans qu'il soit nécessaire de le mélanger au préalable avec un additif.

### RESUME DE L'INVENTION

L'invention concerne un procédé de fabrication d'objets par un système additif de fabrication numérique qui utilise un matériau support, ledit matériau support consistant en un copolymère à blocs consistant en :
- au moins un bloc élastomérique, partiellement ou totalement hydrophile, ayant une Tg inférieure à 30°C et comprenant au moins un monomère hydrophile, et
- au moins un bloc thermoplastique hydrosoluble ayant une Tg supérieure à 30°C et comprenant au moins un monomère ayant un groupe carboxyle.

De manière caractéristique, la proportion massique du ou des bloc(s) thermoplastique(s) est supérieure à 50%, de préférence supérieure ou égale à 60% en poids dudit copolymère. Ceci confère au copolymère à blocs un caractère thermoplastique.

Selon un mode de réalisation, le copolymère dibloc selon l'invention est extrudable.

Selon un mode de réalisation, ledit copolymère dibloc est granulable, présentant un module élastique de cisaillement G' supérieur à 0,1 MPa à la température de découpe. En effet, il est connu de l'homme de l'art qu'en dessous d'un certain de niveau de module, il est difficile de granuler un polymère y compris avec une coupe sous eau. Cette limite de module pourrait être liée aux valeurs présentées par le critère de Dahlquist puisque en dessous de cette limite, même en utilisant des agents anti-mottants, la nature élastomérique du polymère ne pourra pas éviter des problèmes de mottage.

De plus, ledit copolymère est partiellement ou totalement soluble dans l'eau ou en milieu aqueux. Selon un mode de réalisation, ledit copolymère est soluble en milieu alcalin ayant un pH supérieur à 8 et préférentiellement supérieur à 10.

Avantageusement, le taux massique des fonctions carboxyle dans le copolymère dibloc varie de 10 à 40%, de préférence de 20 à 35% par rapport au poids dudit copolymère.

Est également décrit, un procédé de préparation dudit copolymère à blocs par polymérisation radicalaire contrôlée.

### BREVE DESCRIPTION DES FIGURES

La figure 1 représente un diagramme illustrant la solubilité des copolymères dibloc selon l'invention en milieu aqueux, mesurée en termes de perte de poids du copolymère en fonction du temps.
La figure 2 représente un diagramme illustrant la variation du module élastique G' d'un copolymère selon l'invention, en fonction de la température.

### DESCRIPTION DE MODES DE REALISATION DE L'INVENTION

L'invention est maintenant décrite plus en détail et de façon non limitative dans la description qui suit.

L'invention concerne un procédé de fabrication d'objets par un système additif de fabrication numérique qui utilise un matériau support, ledit matériau support consistant en un copolymère à blocs copolymère formé d'au moins un premier bloc élastomérique et d'au moins un second bloc thermoplastique.

Le premier bloc est un bloc élastomérique ayant une Tg inférieure à 30°C et comprenant au moins un monomère hydrophile. Par « monomère » on entend tout monomère polymérisable ou copolymérisable par voie radicalaire. Le terme "monomère" recouvre les mélanges de plusieurs monomères.

Tg désigne la température de transition vitreuse d'un polymère mesurée par DSC selon ASTM E1356. On parle aussi de la Tg d'un monomère pour désigner la Tg de l'homopolymère ayant une masse moléculaire moyenne en nombre Mn d'au moins 10000 g/mol, obtenu par polymérisation radicalaire dudit monomère.

Ledit monomère hydrophile est avantageusement choisi parmi :
- l'acide acrylique ou l'acide méthacrylique,
- les (méth)acrylates et les (méth)acrylamides d'hydroxyalkyle dont le groupe alkyle comprend 2 à 4 atomes de carbone, en particulier le méthacrylate de 2-hydroxyéthyle, le méthacrylate de 2-hydroxypropyle, le méthacrylate de 4-hydroxybutyle, diméthylacrylamide, le (méth)acrylamide de N-(2-hydroxypropyle); les acrylates et méthacrylates de polyéthylène glycol ou de glycol substitués ou non sur leur fonction terminale par des groupements alkyl, phosphate, phosphonate ou sulfonate.
Le deuxième bloc est un bloc thermoplastique ayant une Tg supérieure à 30°C, de préférence comprise entre 50°C et 250°C. Il comprend au moins un monomère ayant un groupe carboxyle. . Ce monomère est de préférence choisi parmi : l'acide acrylique, l'acide méthacrylique, l'acide crotonique, l'acide itaconique, l'acide fumarique, l'acide maléique, l'acide citraconique, l'acide vinylbenzoïque, l'acide acrylamidoglycolique de formule CH₂=CH-CONHCH(OH)COOH, les anhydrides carboxyliques porteurs d'une liaison vinylique, ainsi que leurs sels; et leurs mélanges . Il est entendu que pour les esters mentionnés ci-dessus, ceux-ci seront, après polymérisation, hydrolysés pour conduire aux motifs porteurs de fonctions -CO₂H.

Grâce au monomère hydrophile qui comprend des fonctions carboxyle qui sont aptes à établir des liaisons hydrogène avec les molécules d'eau, le bloc thermoplastique est hydrosoluble ou hydrodispersible.

Un polymère est dit « hydrosoluble » s'il est soluble dans l'eau (autrement dit, s'il forme une solution limpide), à raison d'au moins 5% en poids, à 25°C. Ledit bloc thermoplastique est notamment soluble dans eau courante ou eau basique.

Un polymère est dit « hydrodispersible », s'il forme à une concentration de 5%, à 25°C, une suspension stable de fines particules, généralement sphériques. La taille moyenne des particules constituant ladite dispersion est inférieure à 1 µm et, plus généralement, varie entre 5 et 400 nm, de préférence de 10 à 250 nm. Ces tailles de particules sont mesurées par diffusion de lumière.

Selon un mode de réalisation, le copolymère à blocs est constitué d'un bloc élastomérique et d'un bloc thermoplastique.

Le bloc thermoplastique hydrophile est rigide à température ambiante et constitue la phase majoritaire du copolymère à blocs selon l'invention.

Selon un mode de réalisation, le copolymère dibloc selon l'invention possède un module élastique de cisaillement G' supérieur à 10⁸ a à température ambiante, ce qui montre que, selon le critère de pégosité de Dahlquist, il n'a pas un caractère collant.

Selon un mode de réalisation, ce copolymère dibloc est obtenu par polymérisation radicalaire contrôlée ou vivante. La polymérisation radicalaire contrôlée permet de réduire les réactions de l'espèce radicalaire en croissance, en particulier l'étape de terminaison, réactions qui dans la polymérisation classique interrompent la croissance de la chaîne polymérique de façon irréversible et sans contrôle des réactions de terminaison. Pour résoudre ce problème et diminuer la probabilité des réactions de terminaison, il a été proposé d'utiliser des espèces radicalaires « dites dormantes », sous forme de liaison de faible énergie de dissociation, susceptibles de bloquer et de redémarrer à volonté la polymérisation. On obtient ainsi selon le besoin des périodes de croissance des espèces radicalaires actives et des périodes d'arrêt de croissance. Cette alternance conduit à une augmentation de la masse moléculaire moyenne selon l'avancement de la réaction tout en contrôlant son déroulement. Ce contrôle peut se traduire par une distribution des masses moléculaires plus étroites (indice de polymolécularité plus faible) qu'en radicalaire classique et aussi et surtout, de synthétiser des copolymères à blocs en redémarrant la polymérisation avec un nouveau monomère à partir d'une espèce polymère « dormante ».

En principe, tout procédé de polymérisation radicalaire vivante, compatible avec le choix des monomères, peut être utilisé pour préparer un copolymère à blocs. Une méthode préférée est la polymérisation radicalaire contrôlée en présence d'un médiateur nitroxyde, puisqu'elle permet de polymériser une grande variété de monomères notamment les monomères acryliques et les monomères acryliques fonctionnalisés au moyen de groupes carboxyles. On pourra à cet effet utiliser par exemple les procédés utilisant en tant que radicaux libres stables les nitroxydes tels que le SG1 ou ses dérivés alcoxyamines tels qu'ils sont décrits dans le brevet EP 0 970 973 et les demandes WO 00/49027 et WO 2005/082945.

Un amorceur de polymérisation radicalaire contrôlée préféré est l'alcoxyamine de formule (I) suivante : 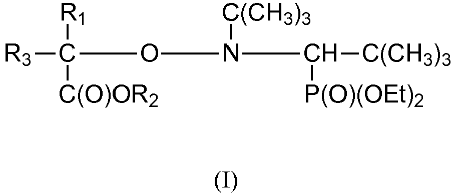 dans laquelle :
* R1 et R3, identiques ou différents, représentent un groupe alkyle, linéaire ou ramifié, ayant un nombre d'atomes de carbone allant de 1 à 3 ;
* R2 représente un atome d'hydrogène, un groupe alkyle, linéaire ou ramifié, ayant un nombre d'atomes de carbone allant de 1 à 8, un groupe phényle, un métal alcalin tel que Li, Na, K, un ion ammonium tel que NH4⁺, NHBu³⁺ ; de préférence R₁ et R₃ étant CH₃ et R₂ étant H, l'abréviation « Bu » signifiant le groupe butyle.

Une alcoxyamine utilisable pour concevoir les copolymères dibloc de l'invention, désignée sous le nom de BlocBuilder®, répond à la formule (II) suivante, dans laquelle l'abréviation « Et » signifie un groupe éthyle :

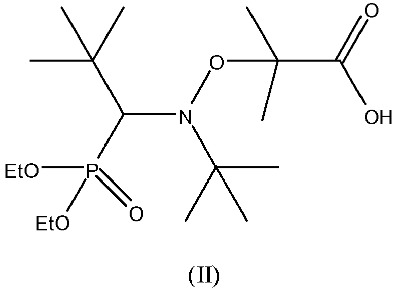

La polymérisation se déroule en général en plusieurs étapes selon le schéma général suivant :
- dans une première étape, on effectue la polymérisation du premier monomère ou mélange de monomères hydrophiles pour former un macroamorceur ou précurseur ;
- dans une deuxième étape, on réalise la polymérisation du second bloc constitué par un monomère ou un mélange de monomères comprenant au moins un monomère ayant un groupe carboxyle, à l'extrémité du macroamorceur.

L'utilisation de ce procédé permet la synthèse des copolymères dibloc selon l'invention en solution, en suspension, en masse, en solvant organique ou en émulsion ce qui permet alors d'obtenir les produits sous la forme d'un latex aqueux comprenant une émulsion stable dans l'eau de ces copolymères.

Le solvant organique, lorsqu'il est nécessaire pour la mise en oeuvre d'un mode de polymérisation, peut être choisi parmi le toluène, le xylène, le chloroforme, l'acétate d'éthyle, la méthyléthylcétone, le dioxanne, le tétrahydrofuranne ou le diméthylformamide.

Le procédé est conduit généralement à une pression pouvant aller de 0,5 à 20 bars et à une température pouvant aller de 50 à 180°C, et de préférence de 90 à 110°C.

Les copolymères dibloc obtenus ont des masses moléculaires et des distributions de la masse moléculaire contrôlées. Avantageusement, la masse moléculaire moyenne en poids *M̅w̅* du copolymère dibloc est comprise entre 10 000 et 1 000 000 g/mol, de préférence entre 50 000 et 300 000 g/mol. La masse moléculaire moyenne en nombre *M̅n̅* est de préférence comprise entre 10000 et 50000.

La distribution de la masse moléculaire ou indice de polydispersité *M̅w̅*/ *M̅n̅* est en général inférieure à 4, avantageusement inférieure à 2. Les masses *M̅w̅* et *M̅n̅* de la présente invention sont exprimées en équivalent polyéthylène glycol et mesurées par Chromatographie d'Exclusion Stérique, SEC, technique également connue sous le nom de GPC pourl'abréviation en anglais de Chromatographie de Perméation de Gel.

L 'invention concerne un procédé de fabrication d'objets par un système additif de fabrication numérique (ou impression 3D), qui utilise comme matériau support le copolymère à blocs décrit plus haut. Avantageusement, ce matériau support est soluble en milieu aqueux, ce qui permet de l'enlever facilement une fois l'objet imprimé. De plus, ce matériau support est compatible pour une utilisation avec des matériaux constitutifs de l'objet à fabriquer, ayant une large gamme de températures de transition vitreuse. Selon un mode de réalisation, le système additif de fabrication numérique est le dépôt de filaments en fusion. Selon un autre mode de réalisation, le système additif de fabrication numérique est le frittage par laser.

Selon un mode de réalisation, le bloc élastomérique contient de l'acrylate de butyle (BA) et du méthacrylate de méthoxypolyéthylène glycol (MAMPEG) et le bloc thermoplastique contient de l'acrylate de butyle, de l'acide méthacrylique (AMA) et du styrène (S) formant un copolymère dibloc P(BA - MAMPEG)- b -P(BA- S - AMA).

### EXEMPLES

Les exemples suivants illustrent l'invention sans la limiter.

### Exemple 1 - Synthèse d'un copolymère P(BA - MAMPEG) - b - P(BA - S - AMA)

La synthèse de ce copolymère dibloc a lieu en deux étapes :
1^{er} bloc P(BA - MAMPEG) en masse puis stripping des monomères n'ayant pas réagi
2^{nd} bloc P(BA - S - AMA) en solvant

### 1.1. Synthèse du bloc P(BA - MAMPEG)

La synthèse de ce premier bloc est réalisées par un procédée de polymérisation en masse au moyen d'un réacteur de type Ingénieur Büro

### Réactifs :

| | |
|---|---|
| - acrylate de butyle (BA) | 624 g |
| - méthacrylate de méthoxypolyéthylène glycol (MAMPEG) | 126 g |
| - BlocBuilder® | 8,26 g |

On vise une masse moléculaire en nombre de 27 000 g/mol à 75% de conversion.

Les réactifs sont pesés puis mélangés sous agitation magnétique, on les introduit ensuite dans le réacteur par dépression. Le réacteur est mis sous agitation (250 tr/min). On dégaze le milieu en alternant trois une pression d'azote et le vide. La polymérisation se fait en trois paliers de température : 90°C pendant 60 min puis 100°C pendant 90 min puis 110°C - La durée de polymérisation est de 345 min. La conversion est suivie par extraits secs on prélève toutes les heures des échantillons. Le MAMPEG n'étant pas volatil seule la conversion de l'acrylate de butyle peut être suivie par mesure de taux de solide (thermobalance 125°C et étuve sous vide 125°C).

Quand la conversion visée est atteinte on baisse la température à 80°C. Une fois la consigne atteinte on va progressivement mettre l'équipement sous vide, les monomères non réagis vont être distillés (récupération dans pièges à azote liquide). On reste environ 90 min à 80°C et sous vide maximal, quand la distillation est terminée on baisse la consigne à 40°C, une fois cette consigne atteinte on introduit 400 g d'éthanol (par dépression) afin de diluer le milieu. On laisse quelques heures sous agitation et à 40°C afin de bien homogénéiser la solution. Cette solution est ensuite récupérée.

### 1.2. Synthèse du bloc P(BA - S - AMA)

On travaille en procédé solvant, en utilisant un mélange éthanol / toluène ayant un ratio massique de 60 / 40. On travaille avec 45% de solvant par rapport à la charge totale.

On introduit un mélange BA / S / AMA ratio massique 30 / 30 / 40.

On vise un copolymère P(BA - MAMPEG) - b - P(BA - S- AMA) de composition massique 30 / 70 avec une conversion du 2^{nd} bloc de 65%.

La charge est préparée comme indiquée ci-dessous :
1^{er} bloc dilué dans éthanol : 200 g
BA/ S / AMA: 104/ 104 /138,7 (g)
Ethanol / Toluène : 138,4 / 161,2 (g)

Les masses molaires (équivalent PS) de ce copolymère sont les suivantes :
Mp=93600 g/mom
Mn=55100 g/mol
Mw=97300 g/mom
Ip=1,77

### Exemple 2 - Mesure de la solubilité en milieu aqueux du copolymère dibloc P(BA - MAMPEG) - b - P(BA - S - AMA)

Pour le test de solubilité, une pastille d'un diamètre de 20 mm et d'une épaisseur de 1mm est réalisée avec une presse et sous une température de 120°C.

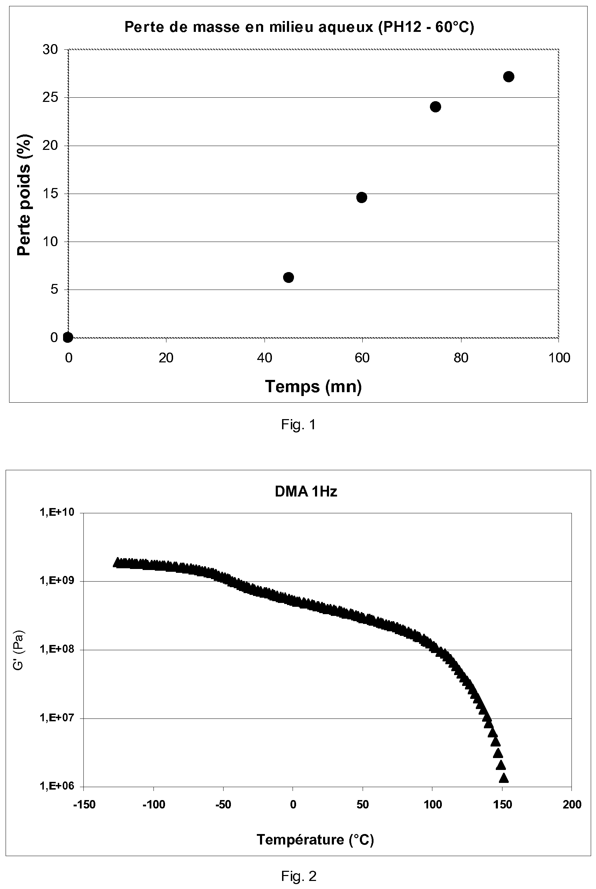

La pastille est mise dans un milieu aqueux légèrement agité et des mesures de perte de masse sont réalisées en fonction du temps. Les résultats obtenus sont représentés dans la figure 1 annexée.

On observe une dissolution de l'échantillon avec une vitesse de perte de masse de l'ordre de 0,25% par minute.

### Exemple 3 - mesure du module élastique de cisaillement (G') par analyse mécanique dynamique (DMA : Dynamic Mecanical Analysis) du copolymère dibloc P(BA - MAMPEG) - b - P(BA - S - AMA)

Les module élastique de cisaillement est mesuré au moyen d'un rhéomètre de type ARES à déformation imposée (TA Instrument). On prépare par moulage un barreau rectangulaire de dimensions 40x10x2mm. L'analyse (balayage en température à une fréquence de 1Hz) se fait sur une géométrie de type torsion rectangulaire.

Les variations de module G' en fonction de température (de -80 à 150°C) sont présentées sur la figure 2.

On observe qu'à température ambiante l'on mesure un module élastique G' d'environ 4.10⁸Pa, ce qui témoigne d'un comportement de type thermoplastique du copolymère selon l'invention.

## Revendications

1. Procédé de fabrication d'objets par un système additif de fabrication numérique qui utilise un matériau support, le dit matériau support consistant en un copolymère à blocs consistant en :
- au moins un bloc élastomérique, partiellement ou totalement hydrophile, ayant une Tg inférieure à 30°C et comprenant au moins un monomère hydrophile, et
- au moins un bloc thermoplastique hydrosoluble ayant une Tg supérieure à 30°C et comprenant au moins un monomère ayant un groupe carboxyle,
ledit copolymère étant partiellement ou totalement soluble dans l'eau ou en milieu aqueux, et la proportion massique du bloc thermoplastique étant supérieure à 50% du poids dudit copolymère.

2. Procédé selon la revendication 1, dans lequel ledit monomère hydrophile du copolymère à blocs est choisi parmi :
- l'acide acrylique ou l'acide méthacrylique,
- les (méth)acrylates et les (méth)acrylamides d'hydroxyalkyle dont le groupe alkyle comprend 2 à 4 atomes de carbone, en particulier le méthacrylate de 2-hydroxyéthyle, le méthacrylate de 2-hydroxypropyle, le méthacrylate de 4-hydroxybutyle, diméthylacrylamide, le (méth)acrylamide de N-(2-hydroxypropyle); les acrylates et méthacrylates de polyéthylène glycol ou de glycol substitués ou non sur leur fonction terminale par des groupements alkyl, phosphate, phosphonate ou sulfonate.

3. Procédé selon l'une des revendications 1 et 2, dans lequel ledit monomère ayant un groupe carboxyle est choisi parmi : l'acide acrylique, l'acide méthacrylique, l'acide crotonique, l'acide itaconique, l'acide fumarique, l'acide maléique, l'acide citraconique, l'acide vinylbenzoïque, l'acide acrylamidoglycolique de formule CH₂=CH-CONHCH(OH)COOH, les anhydrides carboxyliques porteurs d'une liaison vinylique, ainsi que leurs sels; et leurs mélanges .

4. Procédé selon l'une des revendications 1 à 3 dans lequel ledit copolymère est constitué d'un bloc élastomérique et d'un bloc thermoplastique.

5. Procédé selon l'une des revendications 1 à 4 dans lequel le taux massique des fonctions carboxyle dans le copolymère dibloc varie de 10 à 40%, de préférence de 20 à 35% par rapport au poids dudit copolymère.

6. Procédé selon l'une des revendications 1 à 5, dans lequel ledit copolymère est extrudable et granulable.

7. Procédé selon l'une des revendications 1 à 6 dans lequel la proportion massique du bloc thermoplastique étant supérieure ou égale à 60% du poids dudit copolymère.

8. Procédé selon l'une des revendications 1 à 7 dans lequel la Tg dudit bloc thermoplastique dudit copolymère à bloc varie entre 50°C et 250°C.

9. Procédé selon l'une des revendications 1 à 8 dans lequel ledit copolymère a la structure : poly(acrylate de butyle-co-méthacrylate de méthoxypolyéthylène glycol)-block-poly(acrylate de butyle-co-acide méthacrylique) (P(BA-MAMPEG)-b-P(BA- S-AMA)).

10. Procédé selon la revendication 1 dans lequel le système additif de fabrication numérique est le dépôt de filaments en fusion.

11. Procédé selon la revendication 1 dans lequel le système additif de fabrication numérique est le frittage par laser.

## Patentansprüche

1. Verfahren zur Herstellung von Objekten über ein digitales additives Fertigungssystem unter Einsatz eines Trägermaterials, wobei das Trägermaterial aus einem Blockcopolymer besteht, bestehend aus:
- mindestens einem teilweise oder vollständig hydrophilen Elastomerblock mit einer Tg von unter 30 °C und umfassend mindestens ein hydrophiles Monomer, und
- mindestens einem wasserlöslichen Thermoplastblock mit einer Tg von über 30 °C und umfassend mindestens ein Monomer mit einer Carboxylgruppe,
wobei das Copolymer teilweise oder vollständig in Wasser oder in einem wässrigen Medium löslich ist und der Massenanteil des Thermoplastblocks mehr als 50 Gew.-% des Copolymers ausmacht.

2. Verfahren nach Anspruch 1, bei dem das hydrophile Monomer des Blockcopolymers ausgewählt ist aus:
- Acryl- oder Methacrylsäure,
- den Hydroxyalkyl-(Meth)acrylaten und -(Meth)acrylamiden, deren Alkylgruppe 2 bis 4 Kohlenstoffatome umfasst, insbesondere 2-Hydroxyethyl-Methacrylat, 2-Hydroxypropyl-Methacrylat, 4-Hydroxybutyl-Methacrylat, Dimethylacrylamid, N-(2-Hydroxypropyl)(meth)acrylamid; den Polyethylenglycol- oder Glycol-Acrylaten und -Methacrylaten, deren funktionelle Endgruppen durch Alkyl-, Phosphat-, Phosphonat- oder Sulfonat-Gruppen substituiert sind oder nicht.

3. Verfahren nach einem der Ansprüche 1 und 2, bei dem das Monomer eine Carboxylgruppe aufweist, die ausgewählt ist aus: Acrylsäure, Methacrylsäure, Crotonsäure, Itaconsäure, Fumarsäure, Maleinsäure, Citraconsäure, Vinylbenzoesäure, Acrylamidoglycolsäure mit der Formel CH2=CH-CONHCH(OH)COOH, den Carboxylanhydriden als Trägern einer Vinylverbindung sowie deren Salzen; und deren Mischungen.

4. Verfahren nach einem der Ansprüche 1 bis 3, bei dem das Copolymer aus einem Elastomerblock und einem Thermoplastblock gebildet ist.

5. Verfahren nach einem der Ansprüche 1 bis 4, bei dem der Massenanteil der funktionellen Carboxylgruppen im Diblockcopolymer zwischen 10 und 40 Gew.-%, vorzugsweise zwischen 20 und 35 Gew.-%, des Copolymers liegt.

6. Verfahren nach einem der Ansprüche 1 bis 5, bei dem das Copolymer extrudierbar und granulierbar ist.

7. Verfahren nach einem der Ansprüche 1 bis 6, bei dem der Massenanteil des Thermoplastblocks größer oder gleich 60 Gew.-% des Copolymers ist.

8. Verfahren nach einem der Ansprüche 1 bis 7, bei dem die Tg des Thermoplastblocks des Blockcopolymers zwischen 50 °C und 250 °C liegt.

9. Verfahren nach einem der Ansprüche 1 bis 8, bei dem das Copolymer folgende Struktur aufweist:
Poly(butylacrylat-co-Methoxy-Polyethylenglycol-Methacrylat)-Block-Poly(butylacrylat-co-styrol-co-Methacrylsäure) (P(BA-MAMPEG)-b-P(BA-S-AMA)).

10. Verfahren nach Anspruch 1, bei dem das digitale additive Fertigungssystem das Schmelzschichtungsverfahren ist.

11. Verfahren nach Anspruch 1, bei dem das digitale additive Fertigungssystem Lasersintern ist.

## Claims

1. Method for manufacturing objects by means of a digital additive manufacturing system using a support material, said support material consisting of a block copolymer consisting of:
- at least one partially or completely hydrophilic elastomeric block having a Tg of less than 30°C and comprising at least one hydrophilic monomer; and
- at least one water-soluble thermoplastic block having a Tg of greater than 30°C and comprising at least one monomer having a carboxyl group,
said copolymer being partially or completely soluble in water or in an aqueous environment, and the proportion by mass of the thermoplastic block being greater than 50% of the weight of said copolymer.

2. Method according to claim 1, wherein said hydrophilic monomer of the block copolymer is chosen among:
- acrylic acid or methacrylic acid,
- the hydroxyalkyl (meth)acrylates and (meth)acrylamides of which the alkyl group comprises 2 to 4 carbon atoms, in particular 2-hydroxyethyl methacrylate, 2-hydroxypropyl methacrylate, 4-hydroxybutyl methacrylate, dimethylacrylamide, N-(2-hydroxypropyl)(meth)acrylamide; the polyethylene glycol or glycol acrylates and methacrylates substituted or not on their end groups by alkyl, phosphate, phosphonate or sulfonate groups.

3. Method according to one of claims 1 and 2, wherein said monomer having a carboxyl group is chosen among: acrylic acid, methacrylic acid, crotonic acid, itaconic acid, fumaric acid, maleic acid, citraconic acid, vinylbenzoic acid, acrylamidoglycolic acid of formula CH2=CH-CONHCH(OH)COOH, the carboxylic anhydrides bearing a vinyl bond, as well as their salts; and mixtures thereof.

4. Method according to any of claims 1 to 3, wherein said copolymer consists of an elastomeric block and a thermoplastic block.

5. Method according to any of claims 1 to 4, wherein the mass ratio of the carboxyl groups in the diblock copolymer varies from 10 to 40%, preferably from 20 to 35%, relative to the weight of said copolymer.

6. Method according to any of claims 1 to 5, wherein said copolymer can be extruded and granulated.

7. Method according to any of claims 1 to 6, wherein the proportion by mass of the thermoplastic block is greater than or equal to 60% of the weight of said copolymer.

8. Method according to any of claims 1 to 7, wherein the Tg of said thermoplastic block of said block copolymer varies between 50°C and 250°C.

9. Method according to any of claims 1 to 8, wherein said copolymer has the structure: poly(butyl acrylate-co-methoxy polyethylene glycol methylacrylate)-block-poly(butyl acrylate-co-styrene-co-methacrylic acid) (P(BA-MAMPEG)-b-P(BA-S-AMA)).

10. Method according to claim 1, wherein the digital additive manufacturing system is the deposition of molten filaments.

11. Method according to claim 1, wherein the digital additive manufacturing system is laser sintering.
